# EUROPÄISCHE PATENTANMELDUNG

(11) **EP 3 450 476 A1**
(43) Veröffentlichungstag der Anmeldung: **06.03.2019**
(21) Anmeldenummer: 17188861.3
(22) Anmeldetag: 31.08.2017
(51) Int. Cl.: C08G 18/76, C08G 18/42, C09J 175/06

(54) **REAKTIVKLEBSTOFFE MIT NIEDRIGEM GEHALT AN MONOMEREM DIISOCYANAT**

(71) Anmelder: Evonik Degussa GmbH, 45128 Essen (DE)
(72) Erfinder: KOLB, Nicolai, Recklinghausen (DE); BRENNER, Gabriele, 48249 Dülmen (DE)

(57) **Zusammenfassung**

Die vorliegende Erfindung betrifft einen Reaktivklebstoff enthaltend das Umsetzungsprodukt eines Polyesters, aufgebaut aus den Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, und dass das molare Verhältnis der Monomeren A zu Monomeren B 1 : 10 bis 10 : 1 beträgt, als Polyol und optional einem oder mehreren weiteren Polyolen mit einem Diisocyanat, welcher sich dadurch auszeichnet, dass die mittlere OH-Zahl der eingesetzten Polyole von 10 bis 30 mg KOH/g Polyole beträgt, das Verhältnis von OH der eingesetzten Polyole zu NCO-Gruppen des eingesetzten Diisocyanats von 1 zu 1,2 bis 1 zu 4,0 beträgt, und das Umsetzungsprodukt eine Viskosität von 1 bis 200 Pa*s bei 130 °C aufweist sowie ein Verfahren zu dessen Herstellung sowie Verwendung des Reaktivklebstoffes.

## Beschreibung

Die vorliegende Erfindung betrifft einen Reaktivklebstoff enthaltend das Umsetzungsprodukt eines Polyesters, aufgebaut aus den Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, und dass das molare Verhältnis der Monomeren A zu Monomeren B 1 : 10 bis 10 : 1, vorzugsweise 2 : 8 bis 9 : 1 beträgt, als Polyol und optional einem oder mehreren weiteren Polyolen mit einem Diisocyanat, welcher sich dadurch auszeichnet, dass die mittlere OH-Zahl der eingesetzten Polyole von 10 bis 30 mg KOH/g Polyole beträgt, das Verhältnis von OH der eingesetzten Polyole zu NCO-Gruppen des eingesetzten Diisocyanats von 1 zu 1,2 bis 1 zu 4,0 beträgt, und das Umsetzungsprodukt eine Viskosität von 1 bis 200 Pa*s bei 130 °C aufweist sowie ein Verfahren zu dessen Herstellung sowie Verwendung des Reaktivklebstoffes.

(Co-)Polyester, hier vereinfacht auch Polyester genannt, werden in einer Vielzahl von Endanwendungen eingesetzt. Beispielsweise finden Sie Anwendung als Bestandteil in Klebstoffen, als Bindemittel für Metallbeschichtungen, beispielsweise Innenbeschichtungen von Konservendosen, als Bindemittel zur Folienbeschichtung oder aber auch als Bestandteil in der Folienherstellung.

Ein Beispiel zur Verwendung von Polyestern in Klebstoffen sind Reaktivklebstoffe, insbesondere feuchtigkeitshärtende Reaktivklebstoffe (Reactive Hotmelts - RHM bzw. PU Hotmelts). Diese RHM werden üblicherweise über die Reaktion von OH-funktionalisiertem Polymeren (Polyolen) mit Diisocyanat hergestellt.

Dabei wird üblicherweise eine überschüssige Menge Diisocyanat eingesetzt, damit NCOterminierte Polymere (sog. Pre-Polymere) erhalten werden. Diese Pre-Polymere werden dabei als Mischung von NCO-terminierten Polymeren erhalten, die aus einer oder mehreren Wiederholungseinheiten des Polyols, verknüpft über das Diisocyanat, aufgebaut sind. Weiterhin enthält die Mischung der Pre-Polymere aufgrund der überschüssig eingesetzten Menge Diisocyanat nach der Reaktion Restmengen von monomerem Diisocyanat. Aufgrund der kritischen Toxizitätseinstufung von Diisocyanaten, wie bsp. Methylendiphenylisocyanat (4,4'-MDI) ist es erstrebenswert, den Gehalt an solchem monomeren Diisocyanat im fertigen Pre-Polymer bzw. RHM möglichst gering zu halten.

Es gibt diverse Methoden, den Gehalt an verbleibenden monomeren Diisocyanat in den RHM abzusenken. Ohne näher auf die Methoden im Detail einzugehen, wären diese:
- Nutzung von polymerem Diisocyanat bei der Umsetzung mit dem Polyol (DE10055786)
- Einsatz von Diisocyanaten mit unterschiedlich reaktiven NCO-Gruppen (Stereoselektivität). (EP1458780 sowie DE10229519)
- Destillation von Diisocyanat aus dem fertigen Produkt (EP1241197)
- Nachträgliche Reaktion des freien NCO zur chemischen Bindung, beispielsweise Durchführung einer Trimerisierungsreaktion (DE10229780 sowie DE10229781) oder die weitere Reaktion mit einem feuchtigkeits-härtenden Reagenz wie bsp. Mercaptosilan (EP2664637)

Eine weitere Möglichkeit ist die Nutzung von Polymeren (Polyolen) mit höherem Molekulargewicht:
Allgemein wird bei der Herstellung der RHM bzw. Pre-Polymere das Gewichts-Verhältnis von Polyol zu Diisocyanat durch das Verhältnis

   OH-Zahl (Polyol) : NCO-Zahl (Diisocyanat)

   ermittelt. Daraus ergibt sich die Einwaage des Diisocyanates. Üblicherweise wird ein Überschuss im Bereich von OH : NCO 1,0 : 1,5 - 1,0 : 3,0 gewählt.

Bei einem gegebenen Isocyanat - beispielsweise 4,4'-MDI - ist die NCO-Zahl konstant. Das Gewichts-Verhältnis von Polyol zu Isocyanat wird also durch die OHZ des Polyols beeinflusst. Bei Polyolen mit niedrigeren OH-Zahlen wird entsprechend eine verhältnismäßig geringere Menge Diisocyanat verwendet.

Eine einfache Möglichkeit zur Verringerung des Gehaltes des verbleibenden monomeren Diisocyanats in RHM wäre daher das Nutzen von Polyolen mit niedrigerer OHZ - also entsprechend höherem Molekulargewicht. Nachteilig ist dabei jedoch, dass durch das Erhöhen des Molekulargewichts ebenfalls die Viskosität des Polyols exponentiell ansteigt.

Bezogen auf Polyester- diese werden als Polyole häufig für die Herstellung von RHM genutzt - ist dieser Viskositätsanstieg insbesondere für amorphe Polyester kritisch. Aufgrund der Natur der hier häufig verwendeten aromatischen Monomere (beispielsweise Terephthalsäure oder Isoterephthalsäure) haben amorphe Polyester eine sehr hohe Viskosität. Wird das Molekulargewicht bestehender amorpher Polyester signifikant erhöht, steigt die Viskosität in Bereiche, die für die Anwendung in reaktiven Schmelzklebstoffen nicht mehr handhabbar ist, da eine ausreichende Benetzung des zu verklebenden Substrates mit dem Klebstoff nicht mehr gewährleistet ist.

Amorphe Polyester sind allerdings von essentieller Bedeutung für die Herstellung der Reaktivklebstoffe (RHM), da durch die Zugabe von amorphen Polyestern eine hohe Anfangsfestigkeit des Klebstoffs erhalten wird.

Daher war Aufgabe der vorliegenden Erfindung die Bereitstellung von Reativklebstoffen auf Basis von Polyestern, welche einen niedrigen Gehalt an verbleibendem monomeren Diisocyanat (vorzugsweise kleiner 2 Gew.-%) und eine Viskosität aufweisen, die eine Verwendung als Reaktivklebstoff weiterhin ermöglicht.

Überraschenderweise wurde gefunden, dass Reaktivklebstoffe, die das Umsetzungsprodukt eines Polyester mit einem Mindestanteil an Phthalsäure oder Phthalsäureanhydrid als Monomer und einem Diisocyanat enthalten, diese Anforderungen erfüllen können.

Gegenstand der vorliegenden Erfindung sind deshalb Reaktivklebstoffe enthaltend das Umsetzungsprodukt eines Phthalsäure oder Phthalsäureanhydrid als Monomer enthaltenden Polyesters mit einem Diisocyanat wie in den Ansprüchen sowie der nachfolgenden Beschreibung definiert.

Ebenfalls Gegenstand der vorliegenden Erfindung ist ein Verfahren zur Herstellung der erfindungsgemäßen Reaktivklebstoffe sowie deren Verwendung.

Die erfindungsgemäßen Reaktivklebstoffe haben den Vorteil, dass sie aufgrund der niedrigen OHZ selbst bei einem genutzten Überschuss an Diisocyanat von OH:NCO 1,0 : 1,2 bis 1,0 : 4,0 einen relativ niedrigen Gehalt an monomerem Diisocyanate, gleichzeitig jedoch auch eine niedrige Viskosität aufweisen. Bei bestehenden Systemen mit höherer OHZ wäre ein entsprechend niedriger Gehalt an monomerem Diisocyanat nur möglich, wenn der Überschuss OH:NCO verringert werden würde, was einen erheblichen Aufbau von oligomerem Polyurethan und entsprechende Viskositätserhöhung zur Folge hätte.

Die erfindungsgemäßen Reaktivklebstoffe, das erfindungsgemäße Verfahren zu deren Herstellung und die erfindungsgemäße Verwendung der Reaktivklebstoffe werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Der erfindungsgemäße Reaktivklebstoff, enthaltend das Umsetzungsprodukt eines Polyesters, vorzugsweise amorphen Polyester, aufgebaut aus den Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, wobei das molare Verhältnis der Monomeren A zu Monomeren B 1 : 10 bis 10 : 1, vorzugsweise 2 : 8 bis 9 : 1 beträgt, als Polyol und optional einem oder mehrerer weiterer Polyole mit einem Diisocyanat, zeichnet sich dadurch aus, dass die mittlere OH-Zahl der eingesetzten Polyole von 10 bis 30 mg KOH/g Polyole beträgt, das Verhältnis von OH der eingesetzten Polyole zu NCO-Gruppen des eingesetzten Diisocyanats von 1 zu 1,2 bis 1 zu 4,0, bevorzugt 1 zu 1,6 bis 1 zu 2,5 beträgt, und das Umsetzungsprodukt eine Viskosität von 1 bis 200 Pa*s bei 130 °C aufweist.

Die Monomeren C können ein Diol, zwei unterschiedliche Diole C1 und C2 oder mehrere Diole C1 bis Cx umfassen. Vorzugsweise umfasst das Monomer C mindestens oder genau zwei unterschiedliche Diole C1 und C2. Bevorzugte Monomere C sind Monoethylenglykol, Diethylenglykol, Butylethyl-Propandiol, 1,2-Propandiol, 1,3-Propandiol, 1,4-Butandiol, 1,6-Hexandiol, Neopentylglykol, 1,3-Methylpropandiol und/oder 1,5-Methylpentandiol. Besonders bevorzugt ist Monomer C1 Monoethylenglykol und Monomer C2 Neopentylglykol oder 1,3-Methylpropandiol.

Die Monomeren B können einer oder mehrere organische Säuren sein. Handelt es sich bei den Monomeren B um mehrere organische Säuren, so handelt es sich vorzugsweise um mindestens zwei unterschiedliche organische Säuren.

Bevorzugt handelt es sich bei dem/den Monomer(en) B um mindestens eine Säure ausgewählt aus Terephthalsäure, Isoterephthalsäure, Adipinsäure und Succinsäure (Bernsteinsäure).

Die Polyester weisen vorzugsweise eine OH-Zahl von kleiner 28 mg KOH/g, bevorzugt von 10 bis 26 mg KOH/g, besonders bevorzugt von 12 bis 24 mg KOH/g auf. Durch diesen Wert wird ein ausreichend hohes Molekulargewicht des Polyesters sichergestellt, um im erfindungsgemäßen Reaktivklebstoff einen Gehalt an monomerem Diisocyanat von < 2 Gew-% zu erhalten.

Die Polyester weisen vorzugsweise eine Viskosität bei 130 °C von kleiner 100 Pa*s, bevorzugt von kleiner 80 Pa*s auf.

Die Polyester weisen vorzugsweise eine Glasübergangstemperatur von 20 °C bis 60 °C, bevorzugt von 25 bis 55 °C auf.

Besonders bevorzugte Polyester weisen entweder eine Glasübergangstemperatur von 30 +/- 10 °C, bevorzugt 30 +/- 5 °C und eine Viskosität bei 130 °C von kleiner 20 Pa*s, bevorzugt von 1 bis 15 Pa*s auf oder eine Glasübergangstemperatur von 48 +/- 10 °C, bevorzugt 48 +/- 5 °C und eine Viskosität bei 130 °C von kleiner 100 Pa*s, vorzugsweise von größer 30 bis kleiner 80 Pa*s, auf.

Als optionale weitere Polyole können in dem erfindungsgemäßen Reaktivklebstoff z.B. Polyesterpolyole, Polyetherpolyole und beliebige hydroxylfunktionelle Komponenten eingesetzt werden. Die Wahl dieser optionalen Polyole ist an sich beliebig. Allerdings sollten die eingesetzten Polyole die mittlere OHZ der Formulierung nicht wesentlich, vorzugsweise um nicht mehr als 10 % erhöhen.

Als optionale weitere Polyesterpolyole können z.B. flüssige oder feste, amorphe oder (teil-)kristalline Polyester mit Molekulargewichten mit einem Zahlenmittel zwischen 2000 g/mol und 30000 g/mol, bevorzugt zwischen 3000 g/mol und 10000 g/mol (berechnet aus der Hydroxylzahl) eingesetzt werden, wobei lineare Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und Butandiol-1,4. Das Molekulargewicht (Zahlenmittel) der beigemischten Polyetherpolyole sollte vorzugsweise in einem Bereich von 2000 g/mol bis 30000 g/mol, bevorzugt zwischen 3000 g/mol und 10000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polyolefine, hydroxyfunktionelle Polycarbonate oder hydroxyfunktionelle Polyacrylate eingesetzt.

Zur Herstellung des erfindungsgemäßen Reaktivklebstoff verwendete Diisocyanate sind vorzugsweise aromatische, aliphatische und/oder cycloaliphatische Isocyanate, carbodiimidmodifizierte Isocaynate oder isocyanatterminierte Präpolymere. Bevorzugte Diisocyanate sind 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat und Mischungen daraus. Besonders bevorzugte Diisocyanate sind 4,4'-Diphenylmethandiisocyanat und Mischungen aus 4,4'-Diphenylmethandiisocyanat und 2,4'-Diphenylmethandiisocyanat.

Außer dem Umsetzungsprodukt können die erfindungsgemäßen Reaktivklebstoffe bis zu 50 Gew.-%, vorzugsweise von 5 bis 40 Gew.-% bezogen auf die gesamte Formulierung, an weiteren Zusätzen, insbesondere Additiven enthalten, die beispielsweise für eine verbesserte Hydrolysestabilität sorgen. Diese Zusätze können z.B. sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die erfindungsgemäßen Reaktivklebstoffe sind vorzugsweise reaktive Schmelzklebstoffe (Reactive Hot-melts, RHM), die nach der Applizierung durch Feuchtigkeit (bsp. Luftfeuchtigkeit oder feuchte Substrate) zusätzlich chemisch vernetzen.

Die erfindungsgemäßen Reaktivklebstoffe können durch herkömmliche Verfahren, bei denen Polyole mit Diisocyanaten umgesetzt werden, hergestellt werden. Vorzugsweise werden die erfindungsgemäßen Reaktivklebstoffe durch das nachfolgend beschriebene erfindungsgemäße Verfahren hergestellt.

Das erfindungsgemäße Verfahren zur Herstellung eines Reaktivklebstoffs, insbesondere eines erfindungsgemäßen Reaktivklebstoffes, bei dem die Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, verestert werden, wobei das molare Verhältnis der Monomeren A zu Monomeren B 1 : 10 bis 10 : 1, vorzugsweise 2 : 8 bis 9 : 1 beträgt, und dieser Polyester als Polyol, optional in Gegenwart eines oder mehrerer weiterer Polyole, mit mindestens einem Diisocyanat umgesetzt wird, zeichnet sich dadurch aus, dass die mittlere OH-Zahl der eingesetzten Polyole von 10 bis 30 mg KOH/g Polyole beträgt und das Verhältnis von OH-Gruppen der eingesetzten Polyole zu NCO-Gruppen der eingesetzten Diisocyanate von 1 : 1,2 bis 1 : 4,0, vorzugsweise von 1 zu 1,6 bis 1 zu 2,5 beträgt.

Die Synthese der Polyester erfolgt vorzugsweise über eine Schmelzekondensation. Hierzu werden die vorab genannten Monomeren vorzugsweise im Äquivalentverhältnis von Hydroxyl- zu Carboxylgruppen von 0,5 bis 1,5, bevorzugt 1,0 bis 1,3, vorgelegt und aufgeschmolzen. Die Polykondensation erfolgt vorzugsweise in der Schmelze, bevorzugt bei Temperaturen von 150 bis 280 °C vorzugsweise innerhalb von 3 bis 30 Stunden.

Es kann vorteilhaft sein, wenn zunächst ein Großteil der freiwerdenden Wassermenge bei Normaldruck abdestilliert wird. Vorzugsweise wird im weiteren Verlauf das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden.

Die Veresterung kann zusätzlich durch Zugabe eines Schleppmittels und/oder eines Katalysators vor oder während der Reaktion beschleunigt werden. Geeignete Schleppmittel sind beispielsweise Toluol und Xylole. Bevorzugte Katalysatoren sind Organotitan- oder -zinnverbindungen, wie z.B. Tetrabutyltitanat oder Dibutylzinnoxid und Katalysatoren, die auf anderen Metallen wie z. B. Zink oder Antimon basieren, sowie metallfreie Veresterungskatalysatoren.

Weiterhin kann es vorteilhaft sein, weitere Additive und Fahrhilfsmittel, wie z.B. Antioxidantien oder Farbstabilisatoren dem Veresterungsgemisch zuzugeben.

Für die Herstellung der erfindungsgemäßen Polyester allgemein gibt es im Hinblick auf die Monomere B (Di- oder Polycarbonsäuren) und C (Di- oder Polyole) grundsätzlich keine Einschränkungen und es können bezüglich der Monomere B und Monomere C grundsätzlich alle Mischungsverhältnisse auftreten. Die Auswahl richtet sich nach den gewünschten physikalischen Eigenschaften des Polyesters.

Die erfindungsgemäß eingesetzten Monomeren B sind Carbonsäuren, die zwei oder mehr Carboxylgruppen tragen oder deren Anhydride oder Ester. Bei den Monomeren B kann es sich vorzugsweise um aromatische oder um gesättigte oder ungesättigte aliphatische oder gesättigte oder ungesättigte cycloaliphatische Di- oder Polycarbonsäuren handeln. Bevorzugt werden Dicarbonsäuren eingesetzt. Bevorzugt eingesetzte aromatische Carbonsäuren sind Verbindungen wie Dimethylterephthalat, Terephthalsäure und Isophthalsäure.

Bevorzugt eingesetzte lineare aliphatische Carbonsäuren sind z. B. Bernsteinsäure, Dimethylsuccinat, Adipinsäure, Adipinsäuredimethylester, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure und Mischungen daraus.

Bevorzugt eingesetzte gesättigte cycloaliphatische Carbonsäuren sind 1,4-Cyclohexandicarbonsäuren, 1,3-Cyclohexandicarbonsäuren oder 1,2-Cyclohexandicarbonsäuren.

Die Art der für die Herstellung der Polyester eingesetzten Monomere C ist an sich beliebig. Unter Monomeren C sind Verbindungen zu verstehen, die zwei oder mehr Hydroxylgruppen tragen. So können z. B. lineare oder verzweigte aliphatische und/oder cycloaliphatische und/oder aromatische Di- oder Polyole verwendet werden. Bevorzugt werden Verbindungen genutzt, die genau zwei Hydroxylgruppen tragen.

Beispiele für geeignete Monomere C sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus, aber auch Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid oder Etherdiole, d. h. Oligomere bzw. Polymere, z. B. auf Basis Ethylenglykol, Propylenglykol oder Butandiol-1,4, oder Trimethylolpropan, Pentaerythrol oder Glycerin.

Als Monomere C werden in dem erfindungsgemäßen Verfahren vorzugsweise zwei unterschiedliche Diole C1 und C2 eingesetzt. Bevorzugte Monomere C sind Monoethylenglykol, Diethylenglykol, Butylethyl-Propandiol, 1,2-Propandiol, 1,3-Propandiol, 1,4-Butandiol, 1,6-Hexandiol, Neopentylglykol, 1,3-Methylpropandiol und/oder 1,5-Methylpentandiol. Besonders bevorzugt ist Monomer C1 Monoethylenglykol und Monomer C2 Neopentylglykol oder 1,3-Methylpropandiol.

Bevorzugt werden als Monomere C Diole und als Monomere B Dicarbonsäuren eingesetzt.

Es kann vorteilhaft sein, wenn zur Herstellung des Polyesters als weitere Monomere Lactone und Hydroxycarbonsäuren verwendet werden.

Die bei der Veresterung erhaltenen Polyester weisen vorzugsweise mindestens eine Hydroxyl- und/oder Carboxylendgruppe auf, bevorzugt beträgt die Funktionalität 1,0 bis 4,0, besonders bevorzugt 1,5 bis 3,0.

Die Konzentration an Säureendgruppen, bestimmt nach DIN EN ISO 2114, liegt vorzugsweise zwischen 0 und 10 mg KOH/g, bevorzugt jedoch unter 2 mg KOH/g.

Das zahlenmittlere Molekulargewicht der erfindungsgemäß eingesetzten Polyester beträgt vorzugsweise 2000 - 30 000 g/mol, bevorzugt 3000 - 10000 g/mol. Es wird nach DIN 55672-1 mittels Gelpermeationschromatographie in Tetrahydrofuran als Eluent und Polystyrol zur Kalibrierung bestimmt.

Der Anteil des erfindungsgemäß eingesetzten Polyesters an der Formulierung (ohne Additive) beträgt, bezogen auf die gesamte Formulierung, vorzugsweise von 1 bis 95 Gewichtsprozent, bevorzugt von 5 bis 60 Gewichtsprozent und besonders bevorzugt von 10 bis 50 Gewichtsprozent. Auf diese Weise kann eine ausreichende Abbindegeschwindigkeit und daraus resultierend eine ausreichende Handhabungsfestigkeit des Reaktivklebstoffs unmittelbar nach dem Klebstoffauftrag erreicht werden.

Als optionale weitere Polyole können z.B. Polyesterpolyole, Polyetherpolyole und beliebige hydroxylfunktionelle Komponenten eingesetzt werden. Die Wahl dieser optionalen Polyole ist an sich beliebig. Allerdings sollten die eingesetzten Polyole die mittlere OHZ der Formulierung nicht wesentlich, vorzugsweise um nicht mehr als 10 % erhöhen.

Als optionale weitere Polyesterpolyole können z.B. flüssige oder feste, amorphe oder (teil-)kristalline Polyester mit Molekulargewichten mit einem Zahlenmittel zwischen 2000 g/mol und 30000 g/mol, bevorzugt zwischen 3000 g/mol und 10000 g/mol (berechnet aus der Hydroxylzahl) eingesetzt werden, wobei lineare Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und Butandiol-1,4. Das Molekulargewicht (Zahlenmittel) der beigemischten Polyetherpolyole sollte vorzugsweise in einem Bereich von 2000 g/mol bis 30000 g/mol, bevorzugt zwischen 3000 g/mol und 10000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polyolefine, hydroxyfunktionelle Polycarbonate oder hydroxyfunktionelle Polyacrylate eingesetzt.

Als Diisocyanate können in dem erfindungsgemäßen Verfahren aromatische, aliphatische und/oder cycloaliphatische Isocyanate sowie carbodiimidmodifizierte Isocaynate oder isocyanatterminierte Präpolymere eingesetzt werden. Der Einsatz aromatischer Diisocyanate ist bevorzugt. Bevorzugt eingesetzte Diisocyanate sind 4,4'-Diphenylmethandiisocyanat, 2,4'-Diphenylmethandüsocyanat, Toluoldiisocyanat-Isomere, Isophorondiisocyanat, Hexamethylendiisocyanat, 4,4'-Dicyclohexylmethandiisocyanat und Mischungen daraus. Besonders bevorzugt eingesetzte Diisocyanate sind 4,4'-Diphenylmethandiisocyanat und Mischungen aus 4,4'-Diphenylmethandiisocyanat und 2,4'-Diphenylmethandiisocyanat.

Neben Diisocyanaten können auch Polyisocyanate eingesetzt werden.

Es kann vorteilhaft sein, wenn bis zu 50 Gew.-%, vorzugsweise von 5 bis 40 Gew.-% bezogen auf die gesamte Formulierung, an weiteren Zusätzen, insbesondere Additiven, zugegeben werden, die beispielsweise für eine verbesserte Hydrolysestabilität sorgen. Diese Zusätze können z.B. sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die Herstellung des erfindungsgemäßen Reaktivklebstoffes erfolgt im einfachsten Fall durch Mischen der Einzelkomponenten in einem Rührbehälter mit oder ohne Lösungsmittel, vorzugsweise in der Schmelze. Die Aufschmelztemperatur richtet sich vorzugsweise nach der Viskosität der Bestandteile. Sie liegt bevorzugt in einem Bereich von 100 bis 180 °C.

Die erfindungsgemäßen Reaktivklebstoffe werden, abhängig von der Viskosität der jeweiligen Formulierung, vorzugsweise bei Temperaturen von 50 bis 200 °C, bevorzugt von 80 bis 150 °C, appliziert.

Die erfindungsgemäßen Reaktivklebstoffe eignen sich insbesondere zur Herstellung von Verklebungen einer Vielzahl von Substraten, insbesondere zur Verklebung von metallischen Substraten, Textilien und ganz besonders zur Verklebung diverser Kunststoffe. Die Art und der Umfang der Verklebung sind dabei nicht limitiert. Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen), in der Bauindustrie, Schuhindustrie und Textilindustrie sowie im Fensterbau (beispielsweise zur Profilummantelung). Weiterhin eignen sich die erfindungsgemäßen Klebstoffe in der Verpackungsindustrie, als Dichtstoffe sowie als Beschichtungsmaterial.

Die erfindungsgemäßen Reaktivklebstoffe eignen sich sowohl für den Einsatz in einkomponentigen als auch in zweikomponentigen Systemen. Bei den einkomponentigen Klebstoffen erfolgt die Herstellung des Umsetzungsproduktes durch Reaktion der Polyole mit Di- oder Polyisocyanat zeitlich unabhängig vom Klebstoffauftrag, insbesondere zu einem deutlich früheren Zeitpunkt. Nach dem Auftrag des erfindungsgemäßen Polyurethanklebstoffs erfolgt die Härtung beispielsweise durch Feuchtigkeit oder thermisch induzierte Reaktion der im Klebstoff enthaltenen Reaktionspartner.

Bei den zweikomponentigen Klebstoffen wird die Mischung unmittelbar vor Klebstoffauftrag hergestellt. Der Nachteil eines zweikomponentigen Auftrags gegenüber einem einkomponentigen Auftrag ist der erhöhte technische Aufwand sowie eine größere Fehleranfälligkeit, beispielsweise beim Mischen.

Die erfindungsgemäßen Reaktivklebstoffe können z.B. zum Verkleben von Kunststoffen, Metallen oder Holz oder zum Verkleben von Kunststoffen mit Metallen und/oder Holz verwendet werden. Vorzugsweise werden die erfindungsgemäßen Reaktivklebstoffe z.B. zum Verkleben von ABS, Polycarbonat, PET, PMMA, PVC, Holz oder Metallen verwendet.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### 1. Testmethoden:

### a) Bestimmung der Säurezahl:

Die Konzentration an Säureendgruppen wird nach DIN EN ISO 2114 titrimetrisch in mg KOH / g Polymer bestimmt.

### b) Bestimmung der OH-Zahl (OHZ):

Die Konzentration der OH-Gruppen wird nach DIN 53240-2 titrimetrisch in mg KOH / g Polymer bestimmt.

### c) Bestimmung der NCO-Zahl (NCOZ):

Die NCO-Zahl wurde in Anlehnung an die DIN EN 1242 titrimetrisch in Gew-% ermittelt.

### d) Bestimmung der Viskosität:

Die Viskosität der hergestellten Polyester sowie der Umsetzungsprodukte aus Polyester und Diisocyanat wurde in Anlehnung an die DIN EN ISO 3219 mit einem Rotationsviskosimeter in Pa.s bei der jeweils angegeben Temperatur ermittelt.

### e) Bestimmung der Glasübergangstemperatur T_{g}:

Die Bestimmung der thermischen Eigenschaften der im Rahmen der vorliegenden Erfindung eingesetzten Polyester erfolgt durch Dynamische Differenzkalorimetrie (DSC) in Anlehnung an die DSC-Methode DIN 53765. Es werden die Werte des zweiten Heizintervalls angegeben, die Heizrate betrug 10 K/min.

### f) Bestimmung des Molekulargewichts:

Das zahlenmittlere Molekulargewicht der erfindungsgemäßen Polyester wird nach DIN 55672-1 mittels Gelpermeationschromatographie in Tetrahydrofuran als Eluent und Polystyrol zur Kalibrierung bestimmt.

### g) GPC-Bestimmung des freien MDI-Monomergehaltes:

Der Gehalt an freiem 4,4'-MDI wurde per GPC mit einer Alliance HPLC mit einem Waters e2695 Separationsmodul W/O H/C und Waters 2414 Ri-Detektor in Gewichts-% ermittelt, wobei zur optimalen niedermolekularen Auftrennung folgende Säulenkombination genutzt wurde: 2 x Agilent PLgel 3 µm 100 Å 300 x 7,5 mm. Die Messung erfolgte als relative Messung zu einer Reinprobe 4,4'-MDI als Referenz.

### 2. Syntheseverfahren zur Herstellung der Polyester:

Eine Mischung aus Diolen und Disäuren bzw. Disäureanhydriden wurde in den in Tabelle 1 genannten Mengen in einem 2L Glaskolben mit Destillationsaufsatz unter Stickstoff aufgeschmolzen. Bei einer Temperatur von 240 °C wurde innerhalb von etwa vier bis sechs Stunden der größte Teil des entstehenden Reaktionswassers abdestilliert. Anschließend wurde der Reaktionsfortschritt alle 30 Minuten durch Messung der Säurezahl untersucht. Ab einer Säurezahl < 15 mg KOH/g wurden 1,5g Tetra-n-butyl-titanat (Tytan TNBT der Fa. Borica Co., Ldt; 0,1 Gewichtsprozent bezogen auf die theoretische Ausbeute des Polyesters) zugegeben, die Temperatur auf 230°C abgesenkt und der Druck in der Apparatur stufenweise bis auf 10 mbar erniedrigt, wobei die Stufen so gewählt wurden, dass starkes Schäumen der Schmelze vermieden wurde. Anschließend wurde der Reaktionsfortschritt alle 30 Minuten durch Messung der Säurezahl untersucht. Die Reaktion wurde beendet, als keine Säureendgruppen mehr vorlagen (die Säurezahl < 1 mg KOH/g betrug) und eine Konzentration an Hydroxylendgruppen von 22 ± 2 mg KOH/g erreicht wurde.

Für die erhaltenen Polyester wurde gemäß den oben angegebenen Bestimmungsmethoden die OH-Zahl (OHZ), die Viskosität bei 130 °C und die Glasübergangstemperatur Tg bestimmt. Die ermittelten Werte sind in Tabelle 1 angegeben.

**Tabelle 1: Einsatzmengen und Parameter der erhaltenen Polyester**

| Beispiel (Polyester) | Einwaage Diole (mol) | Einwaage Disäuren (mol) | OHZ | Viskosität (@ 130°C) | Tg |
|---|---|---|---|---|---|
| P1 (vgl) | 241 g MEG (3,89 mol) | 576 g TPS (3,47 mol) | 23 | 222 Pa.s | 59 °C |
| | 405 g NPG (3,89 mol) | 576 g IPS (3,47 mol) | | | |
| P2 (vgl) | 241 g MEG (3,89 mol) | 346 g TPS (2,08 mol) | 21 | 265 Pa.s | 58 °C |
| | 405 g NPG (3,89 mol) | 806 g IPS (4,86 mol) | | | |
| P3 | 241 g MEG (3,89 mol) | 576 g TPS (3,47 mol) | 23 | 60 Pa.s | 48 °C |
| | 405 g NPG (3,89 mol) | 513 g PSA (3,47 mol) | | | |
| P4 | 241 g MEG (3,89 mol) | 576 g IPS (3,47 mol) | 22 | 33 Pa.s | 47 °C |
| | 405 g NPG (3,89 mol) | 513 g PSA (3,47 mol) | | | |
| P5 | 241 g MEG (3,89 mol) | 806 g IPS (4,86 mol) | 23 | 48 Pa.s | 50 °C |
| | 405 g NPG (3,89 mol) | 308 g PSA (2,08 mol) | | | |
| P6 | 295 g MEG (4,76 mol) | 588 g IPS (3,54 mol) | 22 | 37 Pa.s | 45 °C |
| | 330 g NPG (3,17 mol) | 524 g PSA (3,54 mol) | | | |
| P7 | 244 g MEG (3,94 mol) | 524 g IPS (3,15 mol) | 22 | 38 Pa.s | 43 °C |
| | 409 g NPG (3,94 mol) | 519 g PSA (3,51 mol) | | | |
| | | 41 g SUC (0,35 mol) | | | |

| | | | | | |
|---|---|---|---|---|---|
| MEG: Ethylenglykol NPG: Neopentylglykol TPS: Terephthalsäure IPS: Isoterephthalsäure PSA: Phthalsäureanhydrid SUC: Succinylsäure (Bernsteinsäure) | | | | | |

Wie Tabelle 1 zu entnehmen ist, zeigen Vergleichsbeispiele P1 und P2, dass Polyester, die als aromatische Disäuren nur TPS und/oder IPS enthalten, bei niedriger OHZ von ∼ 22 bei 130 °C sehr hohe Viskositäten von > 200 Pa.s aufweisen.

Erfindungsgemäße Beispiele P3, P4 und P6 zeigen, dass durch Austausch von TPS oder IPS durch PSA die Viskosität im Vergleich zu P1 erheblich verringert werden kann. Beispiel P5 zeigt dies analog im Vergleich zu P2 mit einem geringeren Anteil PSA als Comonomer.

Beispiel P7 zeigt, dass bei PSA-reichen Polymeren bereits kleine Anteile aliphatischer Disäure ausreichen, um die Viskosität signifikant zu verringern, während die Glasübergangstemperatur weiterhin hoch ist.

### 3. Umsetzung mit Methylendiphenylisocyanate zum Reaktivklebstoff

### Verwendete kommerzielle Polymere:

DYNACOLL^{®} 7150: amorpher Polyester mit OHZ 43, *T*_{g} = 50 °C (Fa. Evonik Resource Efficiency GmbH)
DYNACOLL^{®} 7250: flüssiger Polyester mit OHZ 21, *T*_{g} = - 50 °C (Fa. Evonik Resource Efficiency GmbH)

In einem 500 ml Planschliffkolben wurden 300g der in Tabelle 2 angegebenen Polyol-Mischungen bei 130 °C aufgeschmolzen und für 45 Minuten im Vakuum getrocknet. Danach wurde die in Tabelle 2 angegebene Menge 4,4'-Diphenylmethandiisocyanat (Desmodur 44M - Fa. Covestro) in einem molaren OH/NCO-Verhältnis von 1:2,0 zugegeben und zügig homogenisiert. Zur vollständigen Umsetzung der Reaktionspartner wurde 45 Minuten bei 130 °C unter Schutzgasatmosphäre gerührt. Anschließend wurde der feuchtigkeitshärtende Schmelzklebstoff (RHM) bzgl. Viskosität und NCO-Gehalt analysiert und abgefüllt.

**Tabelle 2: Einsatzmengen und Parameter der erhaltenen Reaktivklebstoffe (RHM)**

| | | | RHM 1 (erfindungs -gemäß) | RHM 2 (erfindungss -gemäß) | RHM 3 (Vergleichsbeispiel) |
|---|---|---|---|---|---|
| P4 | OHZ 22 | Gew.-% | 200g | | |
| P6 | OHZ 22 | Gew.% | | 200g | |
| DYNACOLL 7150 | OHZ 43 | Gew.% | | | 200g |
| DYNACOLL 7250 | OHZ 21 | Gew.% | 100g | 100g | 100g |
| 4,4'-Diphenylmethandiisocyanat | | | 29g | 29g | 47,7g |
| Vis 130°C , RVDV-II | | Pa.s | 32 | 25 | 27 |
| Monomeres MDI (via GPC) | | Gew.-% | 1,6 | 1,8 | 2,8 |

Wie Tabelle 2 entnommen werden kann, weisen die beiden erfindungsgemäßen Reaktivklebstoffe RHM1 und RHM2 nach Umsetzung mit Diisocyanat im Vergleich zum Vergleichsreaktivklebstoff RHM 3 einen erheblich geringeren Gehalt an monomerem Diisocyanat (MDI) auf.

## Patentansprüche

1. Reaktivklebstoff, enthaltend das Umsetzungsprodukt eines Polyesters, aufgebaut aus den Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, und dass das molare Verhältnis der Monomeren A zu Monomeren B 1 : 10 bis 10 : 1 beträgt, als Polyol und optional einem oder mehreren weiteren Polyolen mit einem Diisocyanat, **dadurch gekennzeichnet, dass** die mittlere OH-Zahl der eingesetzten Polyole von 10 bis 30 mg KOH/g Polyole beträgt, das Verhältnis von OH der eingesetzten Polyole zu NCO-Gruppen des eingesetzten Diisocyanats von 1 zu 1,2 bis 1 zu 4,0, und das Umsetzungsprodukt eine Viskosität von 1 bis 200 Pa*s bei 130 °C aufweist.

2. Reaktivklebstoff nach Anspruch 1, **dadurch gekennzeichnet, dass** die Monomeren C ausgewählt sind aus Monoethylenglykol, Diethylenglykol, Butylethyl-propandiol, 1,2-Propandiol, 1,3-Propandiol, 1,4-Butandiol, 1,6-Hexandiol, Neopentylglykol, 1,3-Methylpropandiol und/oder 1,5-Methylpentandiol.

3. Reaktivklebstoff nach Anspruch 1 oder 2, **dadurch gekennzeichnet, dass** die Monomeren C mindestens zwei unterschiedliche Diole C1 und C2 umfassen, bevorzugt ist das Monomer C1 Monoethylenglykol und das Monomer C2 Neopentylglykol oder 1,3-Methylpropandiol.

4. Reaktivklebstoff nach mindestens einem der Ansprüche 1 bis 3, **dadurch gekennzeichnet, dass** die Monomeren B mindestens zwei unterschiedliche organische Säuren sind.

5. Reaktivklebstoff nach mindestens einem der Ansprüche 1 bis 3, **dadurch gekennzeichnet, dass** das Monomere B nur eine organische Säure umfasst.

6. Reaktivklebstoff nach mindestens einem der Ansprüche 1 bis 5, **dadurch gekennzeichnet, dass** das/die Monomer(en) B mindestens eine Säure ausgewählt aus Terephthalsäure, Isoterephthalsäure, Adipinsäure und Succinsäure (Bernsteinsäure) ist/aufweist.

7. Reaktivklebstoff nach mindestens einem der Ansprüche 1 bis 6, **dadurch gekennzeichnet, dass** der Polyester eine Viskosität bei 130 °C von kleiner 100 Pa*s, vorzugsweise kleiner 80 Pa*s aufweist.

8. Reaktivklebstoff nach mindestens einem der Ansprüche 1 bis 7, **dadurch gekennzeichnet, dass** der Polyester Glasübergangstemperatur von 20 °C bis 60 °C, vorzugsweise von 25 bis 55 °C aufweist.

9. Reaktivklebstoff nach mindestens einem der Ansprüche 1 bis 8, **dadurch gekennzeichnet, dass** der Polyester Glasübergangstemperatur von 30 +/- 10 °C und eine Viskosität bei 130 °C von kleiner 20 Pa*s aufweist oder dass er eine Glasübergangstemperatur von 48 +/- 10 °C und eine Viskosität bei 130 °C von kleiner 100 Pa*s aufweist.

10. Reaktivklebstoff nach mindestens einem der Ansprüche 1 bis 9, **dadurch gekennzeichnet, dass** er einen Restgehalt an monomerem Diisocyanat, bezogen auf die Summe aus Umsetzungsprodukt und Diisocyanat von kleiner 2 Gew.-%, vorzugsweise von 0,01 bis kleiner 1 Gew.-% aufweist.

11. Reaktivklebstoff nach mindestens einem der Ansprüche 1 bis 10, **dadurch gekennzeichnet, dass** es sich bei dem Diisocyanat um MDI (Methylendiphenylisocyanat) isomererenrein oder um ein Isomererengemisch handelt.

12. Verfahren zur Herstellung eines Reaktivklebstoffs nach einem der Ansprüche 1 bis 11, **dadurch gekennzeichnet, dass** die Monomeren A, B und C, mit A = Phthalsäure oder Phthalsäureanhydrid, B = mindestens eine organische Säure mit mindestens zwei Säuregruppen oder das entsprechende Anhydrid oder der entsprechende Ester mit der Maßgabe, dass B ungleich A ist, und C = mindestens ein Diol, verestert werden, wobei das molare Verhältnis der Monomeren A zu Monomeren 1 : 10 bis 10 : 1, beträgt, und dieser Polyester als Polyol, optional in Gegenwart eines oder mehrerer weiterer Polyole, mit mindestens einem Diisocyanat umgesetzt wird, **dadurch gekennzeichnet, dass** die mittlere OH-Zahl der eingesetzten Polyole von 10 bis 30 mg KOH/g Polyole beträgt, das Verhältnis von OH-Gruppen der eingesetzten Polyole zu NCO-Gruppen der eingesetzten Diisocyanate von 1 zu 1,2 bis 1 zu 4,0 beträgt.

13. Verfahren nach Anspruch 12, **dadurch gekennzeichnet, dass** als Monomere C Monoethylenglykol, 1,3-Propandiol, 1,4-Butandiol, 1,6-Hexandiol, Neopentylglykol, 1,3-Methylpropandiol und/oder 1,5-Methylpentandiol eingesetzt werden und als Monomer B mindestens eine Säure ausgewählt aus Terephthalsäure, Isoterephthalsäure, Adipinsäure und Succinsäure (Bernsteinsäure) eingesetzt wird.

14. Verwendung des Reaktivklebstoffes gemäß einem der Ansprüche 1 bis 11 zum Verkleben von Kunststoffen, Metallen oder Holz oder zum Verkleben von Kunststoffen mit Metallen und/oder Holz verwendet werden.
